Europäisches Patentamt

European Patent Office

Office européen des brevets

(19)

(11) **EP 0 605 298 B1**

(12) **FASCICULE DE BREVET EUROPEEN**

(45) Date de publication et mention
de la délivrance du brevet:
**21.07.1999 Bulletin 1999/29**

(51) Int Cl.$^6$: **G01N 9/20**, G01N 9/18

(21) Numéro de dépôt: **93403152.7**

(22) Date de dépôt: **23.12.1993**

(54) **Procédé et capteur de mesure de la masse volumique d'un fluide et jaugeur massique comportant un tel capteur**

Verfahren und Sensor zur Erfassung der Dichte einer Flüssigkeit und Gerät zur Massenbestimmung unter Verwendung eines solchen Sensors

Method and sensor for measuring the density of a fluid and a mass gauge using such a sensor

(84) Etats contractants désignés:
**DE GB**

(30) Priorité: **30.12.1992 FR 9215923**

(43) Date de publication de la demande:
**06.07.1994 Bulletin 1994/27**

(73) Titulaire: **SEXTANT Avionique**
**92368 Meudon la Forêt Cédex (FR)**

(72) Inventeur: **Choisnet, Joel**
**F-95530 La Frette Sur Seine (FR)**

(74) Mandataire: **Geismar, Thierry et al**
**Cabinet Geismar,**
**90 avenue Mozart**
**75016 Paris (FR)**

(56) Documents cités:
**EP-A- 0 441 770**     **GB-A- 289 993**
**GB-A- 810 607**      **GB-A- 2 013 900**
**GB-A- 2 210 698**    **US-A- 2 691 296**
**US-A- 3 921 461**

## Description

La présente invention concerne un procédé et un capteur pour la détermination de la masse volumique d'un fluide, ainsi qu'un jaugeur massique comportant un tel capteur.

On connait déjà des jaugeurs capacitifs à tubes concentriques, utilisés notamment pour mesurer le niveau du carburant contenu dans un réservoir. Ces deux tubes constituent un condensateur cylindrique dont la capacité varie avec la hauteur du fluide enfermé entre les deux tubes.

Si l'on appelle

$R_1$    le rayon extérieur du tube intérieur,

$R_2$    le rayon intérieur du tube extérieur,

$H$    la hauteur totale des tubes,

$h$    la hauteur des tubes immergée dans le fluide,

$\varepsilon_0$    la constante diélectrique du vide (ou de l'air),

$\varepsilon$    la constante diélectrique du fluide,

la capacité $C_V$ du condensateur est donnée par :

$$C_V = \frac{2\,\pi}{\text{Log}\,\dfrac{R_2}{R_1}}\,[\varepsilon_0 H + (\varepsilon - \varepsilon_0)h] \tag{1}$$

Si l'on pose

$$C_{V0} = \frac{2\,\pi\,\varepsilon_0 H}{\text{Log}\,\dfrac{R_2}{R_1}} \tag{2}$$

On a alors

$$h = \frac{C_V - C_{V0}}{\varepsilon - \varepsilon_0} \tag{3}$$

La mesure de la capacité $C_V$ permet donc d'obtenir la hauteur $h$ du fluide contenu dans le réservoir, représentative de son volume. On remarquera que la correspondance n'est pas nécessairement linéaire, le réservoir pouvant ne pas avoir une section horizontale constante.

Si l'on appelle $\rho$ la masse volumique du fluide, $\rho\,h$ est donc représentatif de la masse du fluide :

$$\rho h = \rho\,\frac{C_V - C_{V0}}{\varepsilon - \varepsilon_0} \tag{4}$$

Bien que $\rho$ et $\varepsilon$ ne soient pas indépendants l'un de l'autre, le rapport $\rho/(\varepsilon - \varepsilon_0)$ dépend de la nature du fluide et varie avec la température pour un fluide donné.

La mesure de $C_V$ ne donne donc qu'une première approximation de la masse du fluide contenu dans le réservoir, en donnant à $\rho$ et $\varepsilon$ des valeurs moyennes. Or, c'est précisément cette masse et non le volume qui est l'information la plus intéressante dans le cas d'un réservoir de carburant.

La mesure précise de cette masse, indépendamment de la température et de la nature du fluide, nécessite donc une mesure des grandeurs $\rho$ et $\varepsilon$.

On connaît des moyens pour mesurer la constante diélectrique $\varepsilon$ du fluide.

On peut par exemple utiliser un condensateur plan disposé à un emplacement tel qu'il soit toujours totalement immergé dans le fluide et que ce dernier remplisse son espace interélectrode. Si S est la surface des électrodes et e est leur espacement, la capacité $C_{ref}$ obtenue s'écrit alors :

$$C_{ref} = \varepsilon \frac{S}{e} \tag{5}$$

La mesure de $C_{ref}$ donne donc $\varepsilon$ :

$$\varepsilon = \frac{e}{S} C_{ref} \tag{6}$$

de sorte que l'on sait calculer :

$$\varepsilon - \varepsilon_0 = \frac{e}{S} C_{ref} - \varepsilon_0 = \frac{e}{S} (C_{ref} - C_{ref0}) \tag{7}$$

avec :

$$C_{ref0} = \frac{\varepsilon_0 S}{e} \tag{8}$$

On connaît donc le volume vrai du fluide par la formule (3) et la différence $\varepsilon - \varepsilon_0$ par la formule (7), de sorte qu'il reste à mesurer sa masse volumique $\rho$ pour déterminer sa masse.

La présente invention vise notamment à fournir un procédé et un capteur permettant de déterminer cette masse volumique.

A cet effet, l'invention a tout d'abord pour objet un procédé pour la détermination de la masse volumique d'un fluide, caractérisé par le fait qu'il comprend les étapes consistant à :

- placer le fluide dans un réservoir ;

- immerger totalement dans le fluide deux flotteurs présentant des flottabilités différentes ;

- relier lesdits flotteurs à la structure du réservoir par des moyens aptes à s'opposer aux efforts de flottabilité ;

- procéder à une double détection de grandeurs fonctions des positions d'équilibre des flotteurs ; et

- déduire la masse volumique du fluide du résultat de cette double détection.

La flottabilité de chacun des flotteurs, et donc sa position d'équilibre, dépend, conformément au théorème d'Archimède, du poids de fluide déplacé, donc de la masse volumique de ce fluide. On comprend par conséquent que la position d'équilibre de chacun des flotteurs ou toute grandeur fonction de cette position est également fonction de cette masse volumique.

On verra toutefois ci-après que la double détection selon l'invention permet de s'affranchir d'un paramètre particulièrement difficile à estimer avec précision, à savoir le champ local de gravitation, sujet non seulement aux variations locales de la pesanteur terrestre, mais encore, à bord d'un véhicule tel qu'un aéronef, au facteur de charge.

On observera que le document US-A-3 921 461 décrit un dispositif permettant de déterminer la masse volumique d'un liquide comprenant:

- deux flotteurs de flottabilités différentes,
- des moyens pour supporter chacun des flotteurs,
- des moyens de détection, et
- des moyens de détermination de la masse volumique.

Les grandeurs détectées dans l'invention peuvent être de tout type convenable mesurées par exemple par des moyens optiques.

Toutefois, dans un mode de réalisation particulier du procédé selon l'invention, appliqué à la détermination de la masse volumique d'un fluide non conducteur tel qu'un carburant aéronautique, lesdites grandeurs sont les capacités de condensateur formées entre des électrodes solidaires respectivement des deux flotteurs et de la structure du réservoir.

Plus particulièrement, la double détection précitée peut consister en la mesure du rapport de la différence à la somme des capacités des condensateurs formés entre l'électrode solidaire du réservoir d'une part, et, respectivement, l'électrode solidaire de chacun des flotteurs d'autre part.

On verra que ce rapport peut être mesuré d'une façon très simple et qu'il est une fonction linéaire de la masse volumique du fluide, fonction dans laquelle n'apparaît pas la valeur du champ local de gravitation.

L'invention a également pour objet un capteur pour la détermination de la masse volumique d'un fluide contenu dans un réservoir, comprenant:

- deux flotteurs de flottabilités différentes disposés dans le réservoir pour être totalement immergés dans ledit fluide ;

- des moyens, notamment élastiques, pour supporter chacun desdits flotteurs à partir de la structure dudit réservoir en s'opposant aux efforts de flottabilité ;

- des moyens de double détection de grandeurs fonctions des positions d'équilibre des flotteurs ; et

- des moyens pour déduire la masse volumique du résultat de cette double détection.

Dans le cas d'un capteur destiné à la détermination de la masse volumique d'un fluide non conducteur, on peut prévoir plus particulièrement une électrode solidaire de chacun des flotteurs et une électrode solidaire du réservoir, et des moyens de détection des capacités des condensateurs formés entre l'électrode solidaire du réservoir d'une part, et, respectivement, l'électrode solidaire de chacun des flotteurs d'autre part.

Les moyens de détection peuvent notamment être agencés pour mesurer le rapport de la différence à la somme desdites capacités.

Dans des modes de réalisation particuliers de l'invention, les électrodes sont des électrodes planes et l'un des flotteurs possède une flottabilité positive tandis que l'autre possède une flottabilité négative.

L'invention a également pour objet un jaugeur massique comprenant un capteur de masse volumique tel que décrit ci-dessus.

On décrira maintenant, à titre d'exemple non limitatif, un mode de réalisation particulier de l'invention, en référence aux dessins annexés, dans lesquels :

- la figure 1 représente un jaugeur massique selon l'invention,

- la figure 2 représente la partie immergée d'un capteur de masse volumique selon l'invention, et

- la figure 3 est un schéma d'ensemble de ce capteur.

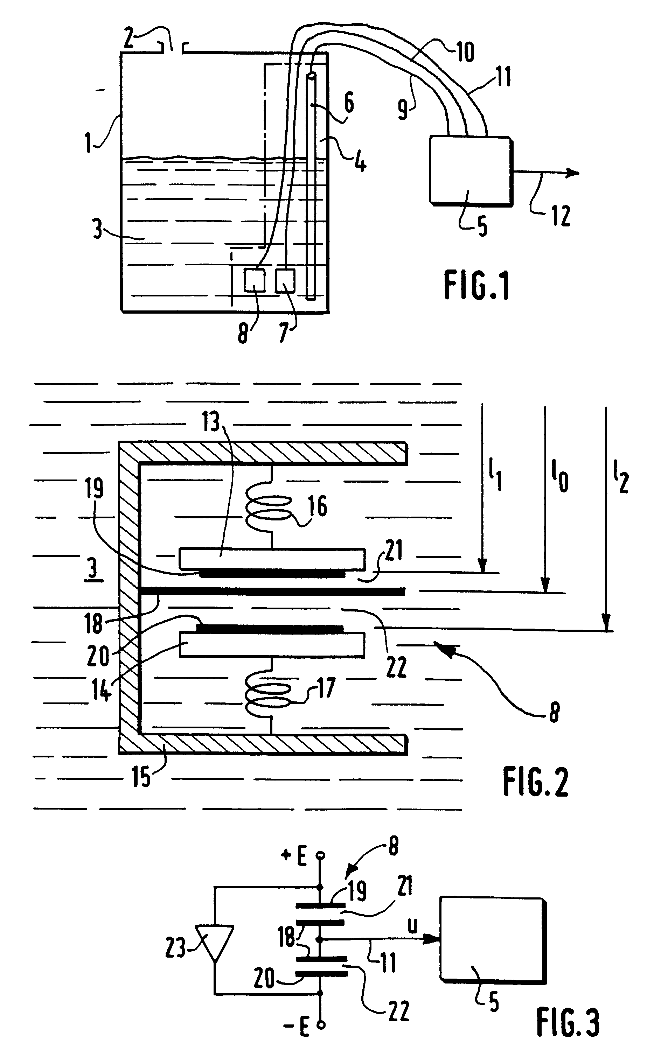

On voit sur la figure 1 un réservoir 1 monté par exemple dans un aéronef et possédant une ouverture 2 pour l'introduction d'un liquide 3 tel qu'un carburant aéronautique.

Un jaugeur massique selon l'invention comprend une unité de détection 4 disposée dans le réservoir 1 et une unité de calcul et d'alimentation 5.

L'unité de détection 4 comprend un capteur de niveau 6 de tout type connu, par exemple à tubes concentriques, un capteur 7, par exemple un condensateur plan, pour mesurer la constante diélectrique du fluide 3, et un capteur 8 tel que décrit ci-dessous pour la détermination de la masse volumique du fluide.

Les capteurs 6, 7 et 8 sont reliés à l'unité de calcul 5 par des lignes 9, 10 et 11, respectivement. L'unité de calcul 5 fournit à sa sortie 12 la masse de fluide 3 contenue dans le réservoir 1.

Comme montré à la figure 2, le capteur 8 comprend pour l'essentiel deux flotteurs 13 et 14 disposés au fond du réservoir 1 à un emplacement tel qu'ils sont toujours totalement immergés. Ces flotteurs 13 et 14 sont mécaniquement liés à la structure du réservoir par des ressorts 16 et 17, respectivement.

Les deux flotteurs 13 et 14 sont disposés l'un au-dessus de l'autre, de part et d'autre d'une électrode plane 18 fixe portée par la structure 15.

Le flotteur 13 porte en vis-à-vis de l'électrode 18 une électrode plane 19 et le flotteur 14 porte en vis-à-vis de l'électrode 18 une électrode plane 20. Les électrodes 18-20 forment par conséquent un condensateur différentiel constitué d'un condensateur plan supérieur 21 (électrodes 18 et 19) et d'un condensateur plan inférieur 22 (électrodes 18 et 20).

Des fils de connexion non représentés à la figure 2 relient les électrodes 18-20 à l'unité de calcul 5.

On appelle $l_1$, $l_0$ et $l_2$ les niveaux des électrodes 19, 18 et 20 respectivement, mesurés à partir d'un niveau de référence quelconque. On affectera de la même manière de l'indice 1 les grandeurs physiques relatives au condensateur 21 et aux organes qui lui sont associés et de l'indice 2 les grandeurs relatives au condensateur 22 et aux organes qui lui sont associés.

On appelera donc $m_i$ la masse du flotteur, $V_i$ son volume, $\rho_i = m_i/V_i$ sa masse volumique, $k_i$ la raideur de son ressort de rappel.

Ces différentes grandeurs sont choisies de sorte que lorsque le capteur 8 est dans l'air ou le vide, et non soumis au champ de gravitation, c'est-à-dire en l'absence de tout effort appliqué aux ressorts de rappel, on ait :

$$l_1 = l_2 = l_0$$

On choisit par ailleurs $\rho_1$ et $\rho_2$ de sorte que :

$$\rho_1 < \rho \text{ (fluide)} \qquad\qquad (9)$$

$$\rho_2 > \rho \text{ (fluide)} \qquad\qquad (9')$$

Le flotteur 13 a donc tendance à remonter vers la surface du fluide en comprimant le ressort 16 tandis que le flotteur 14 a tendance à couler en comprimant le ressort 17.

Les électrodes 19 et 20 ont ainsi toujours tendance à s'écarter de l'électrode fixe 18.

On appelera par ailleurs $\gamma$ la pesanteur apparente dans un repère lié au réservoir 1 (pesanteur terrestre locale + facteur de charge).

Si enfin, on appelle

$C_1$ la capacité du condensateur 21

$C_2$ la capacité du condensateur 22

$\varepsilon$ la constante diélectrique du fluide 3

$S$ la surface des électrodes 19 et 20,

l'équilibre des flotteurs 13 et 14 s'écrit

$$m_1\,\gamma - \rho V_1\,\gamma + k_1\,(l_0 - l_1) = 0 \qquad\qquad (10)$$

$$m_2\,\gamma - \rho V_2\,\gamma + k_2\,(l_0 - l_2) = 0 \qquad\qquad (10')$$

ce qui traduit le fait que, lorsque le capteur 8 est immergé dans un fluide de masse volumique $\rho$, il prend une position d'équilibre sous l'action de son poids, de la poussée d'Archimède due au fluide, et de la force de rappel élastique des ressorts.

Comme par ailleurs :

$$C_1 = \frac{\varepsilon\,S}{l_0 - l_1} \text{ et } C_2 = \frac{\varepsilon\,S}{l_2 - l_0} \qquad\qquad (11)$$

on en déduit que :

$$\frac{C_2 - C_1}{C_2 + C_1} = \frac{(l_0 - l_1) - (l_2 - l_0)}{(l_0 - l_1) + (l_2 - l_0)} \qquad (12)$$

d'où, à partir des équations (9) et (10) :

$$\frac{C_2 - C_1}{C_2 + C_1} = \frac{\rho\left(\dfrac{V_1}{k_1} + \dfrac{V_2}{k_2}\right) - \dfrac{m_1}{k_1} - \dfrac{m_2}{k_2}}{\rho\left(\dfrac{V_1}{k_1} - \dfrac{V_2}{k_2}\right) + \dfrac{m_2}{k_2} - \dfrac{m1}{k_1}} \qquad (13)$$

Si l'on choisit :

$$k_1 = k_2 = k$$

et

$$V_1 = V_2 = V$$

on obtient :

$$\frac{C_2 - C_1}{C_2 + C_1} = \frac{2V}{m_2 - m_1} \, (\rho - \rho_0) \qquad (14)$$

avec :

$$\rho_0 = \frac{m_1 + m_2}{2V} \qquad (15)$$

La mesure de $(C_2 - C_1)/(C_2 + C_1)$ donne par conséquent $(\rho - \rho_0)$ par la formule (14), et donc la masse volumique $\rho$ du fluide 3.

Dans la pratique, on pourra généralement supposer que $\rho$ varie dans un domaine limité par les valeurs extrêmes $\rho_0 \pm \Delta\rho$, où $\Delta\rho$ représente quelques % de $\rho_0$. On pourra alors prendre par exemple :

$$\rho_1 = \frac{\rho_0}{2} \text{ et } \rho_2 = \frac{3\rho_0}{2} \qquad (16)$$

ce qui conduit à :

$$\frac{C_2 - C_1}{C_2 + C_1} = 2 \left( \frac{\rho}{\rho_0} - 1 \right) \qquad (17)$$

La formule (17) permet par conséquent de déduire directement la masse volumique du fluide 3 de la double

détection de $C_1$ et $C_2$ que constitue la mesure du rapport $(C_2 - C_1)/(C_2 + C_1)$.

Ce rapport peut être aisément mesuré par le montage de la figure 3.

L'électrode 19 du condensateur supérieur 21 est portée à la tension +E et l'électrode 20 du condensateur inférieur 22 est portée à la tension -E. Les électrodes 19 et 20 sont par ailleurs reliées en elles par un amplificateur 23 de gain -1.

On peut alors montrer que l'électrode fixe 18 est portée à la tension

$$u = \frac{C_2 - C_1}{C_2 + C_1}\ E \tag{18}$$

La tension u est donc fournie par la ligne 11 à l'unité de calcul 5 qui en déduit la masse volumique $\rho$ du fluide 3.

L'unité de calcul 5 détermine ensuite la masse de fluide contenu dans le réservoir 1 à partir de la formule (4) ci-dessus.

Le capteur 8 est bien entendu représenté à la figure 2 de manière schématique.

C'est ainsi que l'on prévoit de préférence un anneau de garde autour de l'électrode 18 afin d'éviter, le long du bord de cette électrode, une déformation des lignes de champ électriques qui affecterait la linéarité de la relation entre l'espacement des électrodes et la capacité du condensateur.

De même on pourra remplacer les ressorts 16 et 17 par des membranes.

**Revendications**

1. Procédé pour la détermination de la masse volumique d'un fluide, caractérisé par le fait qu'il comprend les étapes consistant à :

   - placer le fluide dans un réservoir (1) ;

   - immerger totalement dans le fluide deux flotteurs (13, 14) présentant des flottabilités différentes ;

   - relier lesdits flotteurs à la structure (15) du réservoir par des moyens (16, 17) aptes à s'opposer aux efforts de flottabilité ;

   - procéder à une double détection de grandeurs fonctions des positions d'équilibre des flotteurs ; et

   - déduire la masse volumique du résultat de cette double détection.

2. Procédé selon la revendication 1, pour la détermination de la masse volumique d'un fluide non conducteur, dans lequel lesdites grandeurs sont les capacités de condensateurs (21, 22) formés entre des électrodes (18-20) solidaires respectivement de la structure du réservoir et des deux flotteurs.

3. Procédé selon la revendication 2, dans lequel on mesure le rapport de la différence à la somme des capacités des condensateurs formés entre l'électrode (18) solidaire du réservoir d'une part et, respectivement, l'électrode (19, 20) solidaire de chacun des flotteurs (13, 14) d'autre part.

4. Capteur pour la détermination de la masse volumique d'un fluide contenu dans un réservoir (1), comprenant :

   - deux flotteurs (13, 14) de flottabilités différentes disposés dans le réservoir pour être totalement immergés dans ledit fluide ;

   - des moyens (16, 17) pour supporter chacun desdits flotteurs à partir de la structure (15) dudit réservoir en s'opposant aux efforts de flottabilité ;

   - des moyens (18-20, 23) de double détection de grandeurs fonctions des positions d'équilibre des flotteurs ; et

   - des moyens (5) pour déduire la masse volumique du résultat de cette double détection.

5. Capteur selon la revendication 4, dans lequel lesdits moyens de support sont des moyens élastiques.

6. Capteur selon l'une quelconque des revendications 4 et 5 pour la détermination de la masse volumique d'un fluide non conducteur, comprenant une électrode (19, 20) solidaire de chacun des flotteurs (13, 14) et une électrode (18) solidaire du réservoir (1), et des moyens de détection des capacités des condensateurs (21, 22) formés entre l'électrode solidaire du réservoir d'une part, et, respectivement, l'électrode solidaire de chacun des flotteurs d'autre part.

7. Capteur selon la revendication 6, dans lequel les moyens de détection sont agencés pour mesurer le rapport de la différence à la somme desdites capacités.

8. Capteur selon l'une quelconque des revendications 6 et 7, dans lequel lesdites électrodes sont des électrodes planes.

9. Capteur selon l'une quelconque des revendications 5 à 8, dans lequel l'un des flotteurs (13) possède une flottabilité positive et l'autre (14) une flottabilité négative.

10. Jaugeur massique comprenant un capteur de masse volumique selon l'une quelconque des revendications 5 à 9.

**Claims**

1. Method for determining the density of a fluid, characterised by the fact that it comprises the stages consisting of:

    - placing the fluid in a tank (1);
    - completely immersing in the fluid two floats (13, 14) having different buoyancies ;
    - connecting said floats to the structure (15) of the tank by means (16 17) able to oppose the buoyancy forces ;
    - proceeding with a double detection of quantities depending on the positions of equilibrium of the floats; and
    - deducing the density from the result of this double detection.

2. Method according to claim 1, for determining the density of a non-conducting fluid, in which said quantities are the capacitances of capacitors (21, 22) formed between electrodes (18-20) respectively integral with the structure of the tank and of the two floats.

3. Method according to claim 2, in which one measures the ratio of the difference to the sun of the capacitances of the capacitors formed between the electrode (18) integral with the tank on the one hand and, respectively, the electrode (19, 20) integral with each of the floats (13, 14) on the other hand.

4. Sensor for determining the density of a fluid contained in a tank (1), comprising :

    - two floats (13, 14) of different buoyancies disposed in the tank in order to be completely immersed in said fluid ;
    - means (16, 17) for supporting each of said floats from the structure (15) of said tank by opposing the buoyancy forces ;
    - means (18-20, 23) for the double detection of quantities dependent on the positions of equilibrium of the floats ; and
    - means (5) for deducing the density from the result of this double detection.

5. Sensor according to claim 4, in which said support means are spring means.

6. Sensor according to one of claims 4 and 5 for determining the density of a non-conducting fluid, comprising an electrode (19, 20) integral with each of the floats (13, 14) and an electrode (18) integral with the tank (1), and means for the detection of the capacitances of the capacitors (21, 22) formed between the electrode integral with the tank on the one hand, and, respectively, the electrode integral with each of the floats on the other hand.

7. Sensor according to claim 6, in which the detection means are arranged for measuring the ratio of the difference to the sum of said capacitances.

8. Sensor according to one of claims 6 and 7, in which said electrodes are flat electrodes.

9. Sensor according to one claims 5 and 8, in which one of the floats (13) has positive buoyancy and the other (14) negative buoyancy.

10. Mass gauge comprising a density sensor according to one of claims 5 to 9.

**Patentansprüche**

1. Verfahren zum Bestimmen der Dichte eines Fluids, gekennzeichnet durch folgende Schritte:

   - das Fluid wird in einen Behälter (1) eingefüllt;
   - zwei Schwimmkörper (13, 14) mit unterschiedlichem Auftrieb werden vollständig in das Fluid eingetaucht;
   - die Schwimmkörper werden an der Konstruktion (15) des Behälters mit Mitteln (16, 17) befestigt, die den Auftriebskräften entgegenwirken können;
   - es wird eine doppelte Messung von Funktionsgrößen der Gleichgewichtsstellungen der Schwimmkörper durchgeführt; und
   - es wird aus dem Ergebnis der doppelten Messung die Dichte abgeleitet.

2. Verfahren nach Anspruch 1 zum Bestimmen der Dichte eines nichtleitenden Fluids, wobei die Größen die Kapazitäten von Kondensatoren (21, 22) sind, die zwischen Elektroden (18-20) gebildet werden, die jeweils mit der Konstruktion des Behälters und den beiden Schwimmkörpern verbunden sind.

3. Verfahren nach Anspruch 2, bei dem das Verhältnis des Betragunterschieds der Kapazitäten der Kondensatoren gemessen wird, die zwischen der mit dem Behälter verbundenen Elektrode (18) einerseits und jeweils der mit jedem der Schwimmkörper (13, 14) verbundenen Elektrode (19, 20) andererseits gebildet sind.

4. Sensor zum Bestimmen der Dichte eines Fluids in einem Behälter (1), mit:

   - zwei Schwimmkörpern (13, 14) mit unterschiedlichem Auftrieb, die in dem Behälter angeordnet sind, um vollständig in das Fluid eingetaucht zu werden;
   - Mitteln (16, 17) zum Abstützen jedes Schwimmkörpers an der Konstruktion (15) des Behälters, wobei sie den Auftriebskräften entgegenwirken;
   - Mitteln (18-20, 23) zum doppelten Messen von Funktionsgrößen der Gleichgewichtsstellungen der Schwimmkörper; und
   - Mitteln (5) zum Ableiten der Dichte aus dem Ergebnis der doppelten Messung.

5. Sensor nach Anspruch 4, bei dem die Stützmittel elastisch sind.

6. Sensor nach einem der Ansprüche 4 und 5 zum Bestimmen der Dichte eines nichtleitenden Fluids, mit einer mit jedem der Schwimmkörper (13, 14) verbundenen Elektrode (19, 20) und einer mit dem Behälter (1) verbundenen Elektrode (18), und mit Mitteln zum Messen der Kapazitäten der Kondensatoren (21, 22), die zwischen der mit dem Behälter verbundenen Elektrode einerseits und jeweils der mit jedem der Schwimmkörper verbundenen Elektrode andererseits gebildet sind.

7. Sensor nach Anspruch 6, bei dem die Meßmittel das Verhältnis des Betragunterschieds der Kapazitäten messen können.

8. Sensor nach einem der Ansprüche 6 und 7, bei dem die Elektroden als ebene Elektroden ausgebildet sind.

9. Sensor nach einem der Ansprüche 5 bis 8, bei dem einer der Schwimmkörper (13) einen positiven Auftrieb und der andere (14) einen negativen Auftrieb hat.

10. Vorrichtung zur Massebestimmung, die einen Dichte-Sensor nach einem der Ansprüche 5 bis 9 aufweist.

FIG.1

FIG.2

FIG.3